Europäisches Patentamt

European Patent Office

Office européen des brevets

(11) Publication number: **0 128 909**

**B1**

# EUROPEAN PATENT SPECIFICATION

(45) Date of publication of patent specification: **01.02.89**

(21) Application number: **83903865.0**

(22) Date of filing: **07.11.83**

(86) International application number:
**PCT/US83/01737**

(87) International publication number:
**WO 84/02484 05.07.84 Gazette 84/16**

(51) Int. Cl.⁴: **B 23 D 55/08**

## (54) OSCILLATING BAND SAW MACHINE.

(30) Priority: **21.12.82 US 451976**

(43) Date of publication of application:
**27.12.84 Bulletin 84/52**

(45) Publication of the grant of the patent:
**01.02.89 Bulletin 89/05**

(84) Designated Contracting States:
**FR**

(56) References cited:
**DE-A-2 330 023**
**DE-A-3 102 766**
**DE-C- 823 341**
**FR-A-2 164 133**
**JP-A-57 107 729**
**JP-A-57 163 020**
**US-A-3 077 132**
**US-A-3 077 132**
**US-A-3 789 717**
**US-A-4 127 045**
**US-A-4 127 045**

(73) Proprietor: **AMERICAN SAW & MFG. COMPANY**
**301 Chestnut Street**
**East Longmeadow MA 01028 (US)**

(72) Inventor: **HOWARD, Brewster, L., Sr.**
**36 Druids Lane**
**West Springfield, MA 01089 (US)**

(74) Representative: **Spott, Gottfried, Dr. et al**
**Sendlinger-Tor-Platz 11**
**D-8000 München 2 (DE)**

Courier Press, Leamington Spa, England.

## Description

This invention relates to an oscillating band saw machine as set forth in the preamble of claim 1. A band saw machine of this type is known from US—A—4 127 045.

In the known band saw machine the oscillating drive mechanism disposed in the head is provided to cyclically superimpose a load to the cutting reach of the saw blade in addition to the continuous load provided by the weight of the head or eventually by a hydraulic cylinder acting on the head. The amplitude of movement provided by the oscillating drive mechanism is from about 0,025 mm to about 5 mm, depending on the length of the cutting reach which may range from about 25 cm to about 125 cm. Hence, it may be derived therefrom that no considerable variation of the cutting angle results from this oscillation. Cutting times can be reduced by about 5,5% when operating the oscillating drive mechanism, using an oscillation frequency of about 4 Hz.

From DE—C—823 341 a band saw machine is known in which the head of the machine is pivotally mounted at one end thereof to a base. The mounted height of the pivotal joint with respect to the base is displaceable during operation of the machine to vary the cutting angle of the saw blade at the work piece fixedly mounted to the base. Thereby, cutting time of the machine is considerably reduced. The head of the machine being oscillated during sawing operation of the machine in a circular path which lies in the plane of the saw blade, a supporting means eventually connected to the other end of the head must allow for this movement, which may render the machine complex.

In US—A—3 789 717 a band saw machine is disclosed comprising a head pivotally mounted to a machine base. The base includes a pair of clamping jaws for a work piece with the jaw closest to the pivotal mounting being adjustable and with the other jaw being fixed. The head includes two driven pulleys, and an endless saw band extending partially around and between them, and a pair of guides for the saw band with the guide closest to the pivotal mounting of the head being adjustable and with the other guide being fixed in the running direction of the saw band, said guides directing a portion of the saw band between the pulleys into the feed plane for cutting the work piece. A control arrangement is provided for automatically and simultaneously adjusting both the adjustable clamping jaw and the adjustable guide so that the length of the band saw portion supported by the guides is automatically matched to the width of the work piece fixed in said pair of jaws. There are no means for varying the cutting angle of the saw band.

It is the object of the invention to provide an oscillating band saw machine as set forth above in which the cutting time is shortened to a considerable extent to improve cutting efficiency.

This object is attained by the characterizing features of claim 1. A preferred embodiment of the invention is subject matter of the dependent claim.

The invention will now be explained with reference to an embodiment shown in the drawings, in which:

Fig. 1 is a side elevational view of a band saw;

Fig. 2 is a partial elevational view showing saw blade guides of a band saw blade illustrative of an embodiment of this invention, and

Fig. 3 is a cross-sectional view on an enlarged scale showing a blade oscillating means of this invention.

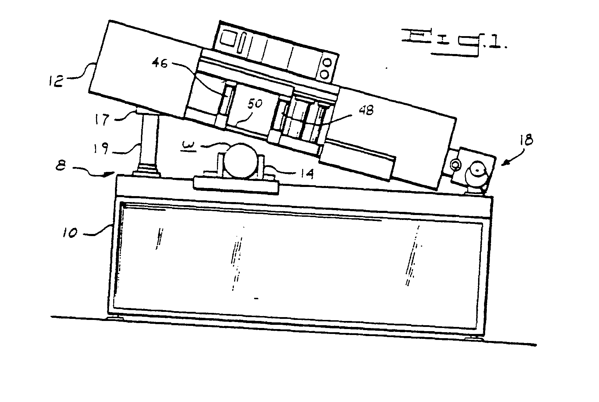

Referring in detail to the drawings, in Fig. 1 is shown a band saw machine 8 of the type embodying this invention. The machine includes a base 10 and a head 12. A work piece w is shown mounted on the upper surface of the base is held in fixed relation thereon by vise or clamping members 14.

The band saw head 12 comprises a hinged or pivotable housing in which a band saw blade 50 in the form of an endless loop is disposed around an idler wheel or pulley (not shown) disposed within one end of the housing and a drive wheel (not shown) disposed in the opposite end of the housing. As illustrated, the band saw housing is supported at its outer end by an hydraulic or pneumatic cylinder 17 and connecting rod 19 and at its other end by a pivotal joint 18 on base 10. The cylinder 17 is pivotably mounted so that the head 12 can be pivoted in a plane which lies in the plane of the saw blade.

The lower span of the band saw blade 50 is disposed between a pair of spaced saw guides arms 46 and 48 which include guide blocks at their lower ends to hold the moving blade in a plane perpendicular to the work piece w and urge the blade 50 against the work piece w.

So far, the band saw machine 8 is of conventional type wherein the cutting head 12 of the machine is hinged at one end thereof. The head of the band saw machine is not rocked or oscillated but is maintained at essentially the same angle relative to the work piece w while the cutting span of the saw blade 50 between saw guides 46 and 48 is itself deflected or rocked relative to the work piece w.

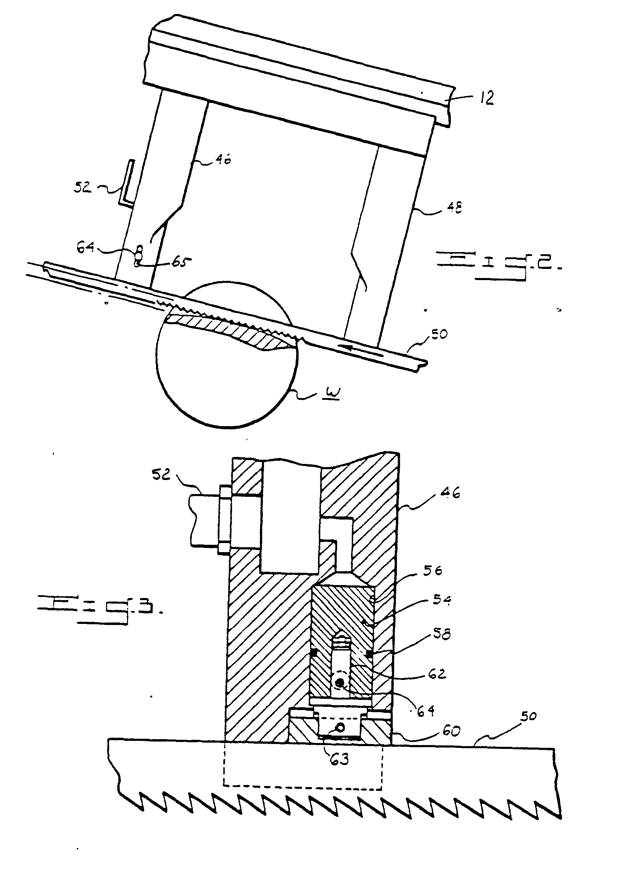

To effect varying the cutting angle of the blade, a mechanism is provided which is illustrated in Figs. 2 and 3.

As best shown in Fig. 3, a cylinder 56 is bored into the lower end of the saw guide arm 46 and a tubular conduit 52 is connected to a pressurized fluid source, such as for a pneumatic or hydraulic system. Disposed within the cylinder 56 is a small piston 54 equipped with a sealing ring 58 to form a fluid tight seal with the cylinder wall. A connecting pin 62 having its upper shank portion slidably fitted into a bore in the lower end of the piston 54 is adapted to transmit downward motion of the piston 54 to saw guide block 60 engaged with the upper edge portion of the band saw blade 50. The lower end of the connecting pin 62 is affixed as at 63 to the block 60 so that downward movement of the piston 54 is transmitted by the guide block 60 to the band saw 50.

A cross pin 64 extends transversely through the connector pin 62, piston 54 and a vertically elongated slot 65 in the wall of cylinder 56. This construction serves to retain the several movable components in assembled relation while permitting reciprocable movement of piston 54. Means 52 is provided to apply fluid high pressure intermittently to piston 54 and to release such pressure. As the piston 54 moves downward in the saw guide arm 46, the leading end portion of the blade 50 in relation to its direction of movement, as indicated by the arrow in Fig. 2, is deflected downward by the guide block 60 as it advances past the arm 46. This causes the span of blade 50 moving between the saw guides 46 and 48 to be angularly tilted. The blade 50 is held in this angular orientation for a predetermined period of time and this is retracted when high pressure in the cylinder 56 is released. Tension of the blade 50 and pressure against the work piece w will cause the blade 50 to resume to its undeflected condition, that is both the leading and trailing end portions of the blade 50 are again disposed normal to the saw guides 46 and 48. In this embodiment, the cutting span of the blade 50 per se is alternatively tilted and released in an intermittent or cyclical rocking action.

## Example I

To evaluate the performance of this embodiment, a series of cutting tests were conducted using a standard band saw. The machine was fitted with a standard type bimetal, welded edge band saw having an M—42 steel cutting edge 25,4 mm × 8,89 mm × ¾ (1" × .035" × ¾) vari-tooth. The saw was run at a speed of about 37m (120 feet) per minute using a commercially available coolant and the machine was operated in a conventional manner. A series of through cuts were made on 304 stainless steel bar stock of about 10 cm (4 inch) diameter. The time for each complete cut-off was recorded as follows:

| CUT NO. | TIME/MIN. | CUT NO. | TIME/MIN. |
|---|---|---|---|
| 1. | 7.82 | 11. | 9.38 |
| 3. | 7.61 | 13. | 9.90 |
| 5. | 5.75 | 15. | 10.20 |
| 7. | 6.64 | 17. | 10.98 |
| 9. | 9.19 | 19. | 11.41 |
| | | Avg. | 8.89 |

## Example II

For this Example all the conditions of Example I were duplicated, except that the fluid pressure operated piston 54, as shown in Fig. 3, was operated on a 2 second cycle i.e., 1½ seconds "on" and ½ seconds "off". It is considered that any suitable time cycle could be used as long as the blade angle is intermittently varied by a 2—4 second cycle is preferred. With the angle of the cutting span portion of the blade being intermittently varied, the following results were obtained:

| CUT NO. | TIME/MIN. | CUT NO. | TIME/MIN. |
|---|---|---|---|
| 1. | 3.91 | 11. | 3.78 |
| 3. | 3.49 | 13. | 3.95 |
| 5. | 3.03 | 15. | 4.12 |
| 7. | 3.37 | 17. | 4.26 |
| 9. | 3.86 | 19. | 4.21 |
| | | Avg. | 3.80 |

With this blade, the tests were continued for 35 cuts and the final cutting time was 5.22 minutes.

A comparison of these two tests again showed a most surprising and dramatic improvement in cutting efficiency and blade wear.

This invention disclosed herein minifests a remarkable improvement in cutting speed and blade wear for a band saw in which the blade angle, as presented to the work, is varied as it cuts through the work piece.

**Claims**

1. Oscillating band saw machine including a base portion (10), a head (12) pivotally supported on the base (10) at one of its oposed ends and including a pair of longitudinally spaced pulleys with an endless saw blade (50) looped about the pulleys and being driven along a given path, and a pair of longitudinally spaced saw blade guides (46, 48) engaged with the outer edge of the saw blade (50) for urging a cutting span thereof against a work piece (w) mounted on said base (10), and further comprising an oscillating drive mechanism (54—60) disposed on at least one of said saw guides (46, 48) and including tilting means (54, 56, 60) for tilting the cutting span of said saw blade (50) relatively to the head (12), characterized in that said tilting means (54, 56, 60) are controlled so that the span is tilted to a given angle, maintained at said angle for a predetermined time and then released and maintained at a substantially different angle for said predetermined time, whereby the saw blade (50) is alternately tilted to different cutting angles for cutting said work piece (w).

2. Oscillating band saw machine as set forth in claim 1 in which said tilting means comprises a fluid operated piston (54) disposed on the leading one of said saw blade guides (46, 48) in relation to the direction of movement of said saw blade (50) over the work piece (w).

**Patentansprüche**

1. Oszillierende Bandsägemaschine mit einem Grundgestell (10), einem Kopf, der an dem Grundgestell (10) an einem seiner einander entgegengesetzten Enden schwenkbar gelagert ist und ein Paar in Längsrichtung beabstandeter Rollen trägt, um die ein endloses Sägeblatt (50) geschlungen ist, das längs eines gegebenen Weges angetrieben ist, und mit einem Paar in Längsrichtung beabstandeter Sägeblattführungen (46, 48), die am Außenrand des Sägeblatts (50) angreifen, um einen schneidenden Abschnitt desselben gegen ein Werkstück (w) zu drücken, das auf dem Grundgestell (10) montiert ist, und weiterhin enthaltend einen oszillierenden Antriebsmechanismus (54—60), der an wenigstens einer der Sägeführungen (46, 48) angeordnet ist und eine Neigungseinrichtung (54, 56, 60) zum Neigen des schneidenden Abschnitts des Sägeblatts (50) gegenüber dem Kopf (12) enthält, dadurch gekennzeichnet, daß die Niegungseinrichtung (54, 56, 60) derart gesteuert ist, daß der genannte Längenabschnitt in einem gegebenen Winkel geneigt wird, für eine vorbestimmte Zeitdauer in diesem Winkel gehalten und dann gelöst und unter einem wesentlichen anderen Winkel für die vorbestimmte Zeitdauer gehalten wird, wodurch das Sägeblatt (50) alternierende in verschiedene Schneidwinkel geneigt wird, um das Werkstück (w) zu zerschneiden.

2. Oszillierende bandsägemaschine nach Anspruch 1, bei der der Neigungsmechanismus einen fluidisch betätigten Kolben (54) enthält, der an der in Bezug auf die Bewegungsrichtung des Sägeblatts (50) über das Werkstück (w) vorderen der Sägeblattführungen (46, 48) angeordnet ist.

**Revendications**

1. Scie à ruban oscillante comprenant un socle (10), une tête (12) articulée sur le socle (10) par l'une de ses extrémité opposées et comprenant une paire de poulies espacées longitudinalement avec une lame de scie sans fin (50) formant une boucle autour des poulies et entrainée suivant un trajet donné, et une paire de guides (46, 48) pour la lame de scie, espacés longitudinalement, en contact avec le bord externe de la lame de scie (50) pour forcer une plage de coupe de cette lame contre une pièce (w) fixée sur ledit socle (10), et comprenant en outre un mécanisme (54—60) d'entrainement en oscillation disposé sur au moins l'un desdits guides (46, 48) de la lame de scie et comprenant des moyens (54, 56, 60) d'inclinaison pour faire incliner la plage de coupe de ladite lame de scie (50) par rapport à la tête (12), caractérisée en ce que lesdits moyens d'inclinaison (54, 56, 60) sont commandés de façon que la plage soit inclinée à un angle donné, maintenue audit angle pendant un temps prédéterminé et ensuite libèrée et maintenue à un angle notablement différent pendant ledit temps prédéterminé, grâce à quoi ladite lame de scie (50) est alternativement inclinée à différents angles de coupe pour couper ladite pièce (w).

2. Scie à ruban oscillante suivante la revendication 1, dans laquelle lesdits moyens d'inclinaison comprennent un piston (54) actionné par un fluide, disposé sur celui desdits guides (46, 48) de la lame de scie qui est situé en avant par rapport au sens de déplacement de ladite lame de scie (50) au dessus de la pièce (w).

Fig.1.

Fig.2.

12

46

52

64

65

48

50

w

Fig.3.

52

46

56

54

58

62

64

60

63

50